Europäisches Patentamt

European Patent Office

Office européen des brevets

(11) Publication number: **0 239 215**
**A1**

# EUROPEAN PATENT APPLICATION

(21) Application number: 87301205.8

(22) Date of filing: 12.02.87

(51) Int. Cl.⁴: **C08F 289/00 , C09J 7/04 ,**
**C08J 3/28**

(30) Priority: 27.02.86 US 833685

(43) Date of publication of application:
**30.09.87 Bulletin 87/40**

(84) Designated Contracting States:
**BE DE ES FR GB IT NL SE**

(71) Applicant: GENCORP INC.
One General Street
Akron Ohio 44329(US)

(72) Inventor: Erickson, David E.
3390 Charring Cross Drive
Stow§Ohio 44224(US)

(74) Representative: Paget, Hugh Charles Edward
et al
MEWBURN ELLIS & CO. 2/3 Cursitor Street
London EC4A 1BQ(GB)

(54) Treatment of grafted protein latices.

(57) Ultrasonic irradiation of latices of a graft copolymer of a conjugated diene monomer and a vinyl aryl monomer on a protein such as a soy protein reduces the viscosity and increases the light transmission of the graft copolymer latex. Further improvements in viscosity can be obtained by incrementing the protein into the polymerization reactor during the graft copolymerization process.

EP 0 239 215 A1

## Treatment of Grafted Protein Latices

This invention relates to the treatment of grafted protein latices.

The free radical aqueous graft, inter or over copolymerization of a conjugated diene monomer and a vinyl aryl monomer on a protein using an azo initiator produces a latex which exhibits particle groupings which drastically increase the viscosity of the latex especially at low shear rates.

Major factors affecting latex viscosity are the average particle size and size distribution. During light transmission and electron microscopical studies to define these properties of the graft or interpolymer latices, it was found that many of the latex particles were present in large groupings which were removed by filtration through filters with pores as large as 1.2 microns in diameter. The photomicrographs of these latices showed long strings of particles as well as large three-dimensional groups of particles. Particle groupings such as were observed can affect the rheology in different ways, depending on whether they occlude a significant amount of dispersion medium (i.e., water) and whether they can be broken apart during shearing and reform when shearing does not occur.

The present invention explores the possibility of avoiding the difficulties alluded to above and of providing a method for making a grafted protein latex having reduced viscosity.

The possibility of providing a grafted protein latex having reduced viscosity is also considered.

According to the present invention, a latex of a protein graft copolymerized with a conjugated diene monomer and a vinyl aryl monomer is treated with ultrasonic irradiation at a level of frequency and for a period of time sufficient to reduce the viscosity of the latex and also to provide greater light transmission. Reduced viscosity facilitates pumping and handling in further operations like preparing compositions for paper coatings and the like.

The graft copolymerization is done in alkaline aqueous media. The protein is dissolved or rendered finely divided (colloidal suspension) in aqueous ammonium hydroxide or other suitable aqueous alkaline material before polymerization is initiated by an azo initiator. In the graft copolymerization the conjugated diene monomer is used in an amount of from about 25 to 50 parts by weight, the vinyl aryl monomer is used in an amount of from 30 to 60 parts by weight and the protein is used in an amount of from 10 to 30 parts by weight, the total of all three ingredients being 100 parts by weight. In this graft polymerization process, added emulsifiers, colloids or surfactants may be added but are not needed.

Proteins, of course, in various forms are well know materials and have many uses. Please see "Encyclopedia of Polymer Science and Technology," John Wiley & Sons, Inc., Vol. 2 (1965), Vol. 8 (1968), Vol. 9 (1968), Vol. 11 (1969) and Supplement Vol. 2 (1977).

For example, they may be obtained as hydrolyzed collagen from fish and animal skin and bones, as albumen from blood and egg white, as casein from milk, as the gluten fractions from corn and wheat and/or the proteins derived from seeds and like such as soy beans, e.g., soy protein which is preferred in the method of the present invention.

Examples of copolymerizable conjugated diene monomers which can be used are those diene monomers of from 4 to 6 carbon atoms such as butadiene-1,3 (preferred), isoprene, 2,3-dimethyl butadiene-1,3, piperylene, chloroprene and so forth and mixtures thereof. Examples of copolymerizable vinyl aryl monomers are those having from 8 to 12 carbon atoms such as styrene (preferred), alpha methyl styrene, p-tertiary butyl styrene, 3-ethyl styrene, methyl vinyl toluene and para vinyl toluene and the like and mixtures thereof.

A chelating agent may be used in a very minor amount sufficient to chelate any interfering ions such as the ferric or ferrous ion, or other polymerization interfering ion or material. In general it may be used in an amount of from about 0.01 to 1.0, preferably about 0.05 part by weight per 100 parts by weight of the diene monomer, vinyl aryl monomer and protein. Examples of some chelating agents are trisodium ethylene diamine tetraacetate dihydrate (preferred), ethylenediaminetetraacetic acid tetrasodium salt, technical ethylenediaminetetraacetic acid tetrasodium salt, ethylenediaminetetraacetic acid tetrasodium salt dihydrate, ethylenediaminetetraacetic acid trisodium salt monohydrate, ethylenediaminetetraacetic acid disodium salt dihydrate, ethylenediaminetetraacetic acid, nitrilotriacetic acid disodium salt monohydrate, nitrilotriacetic acid, N-hydroxyethylethylenediaminetriacetic acid trisodium salt, N-hydroxyethylethylenediaminetriacetic acid trisodium salt dihydrate, ethanoldiglycine disodium salt (or disodium N-hydroxyethyliminodiacetic acid), diethanolglycine sodium salt (or sodium dihydroxyethyl glycine) and the like and mixtures of the same.

The initiator or catalyst used is an oil soluble azo initiator or catalyst. Azo initiators for free radical polymerization are well known. In this connection please see the "Encyclopedia of Polymer Science and Technology," Vol. 2, 1965, pages 278-295, John Wiley & Sons, Inc. Of these initiators it is preferred to use the azonitriles. Examples of some of these compounds are azobisdimethylvaleronitrile, 2,2'-azobisisobutyronitrile (preferred), 2,2'-azobis-2-methylbutyronitrile and 2,2'-azobis (methylisobutyrate) and the like and mixtures of the same. Only minor amounts by weight of the initiator are necessary to effect copolymerization.

Chain transfer agents or modifiers are preferably used during the graft copolymerization to control molecular weight, gel and so forth. While various modifiers or chain transfer agents have been proposed and may be used such as benzene, toluene, triphenyl methane, carbon tetrachloride and so forth, it is preferred to use mercaptans such as the alkyl and/or aralkyl mercaptans of from 8 to 18 carbon atoms of which the tertiary alkyl mercaptans are much preferred. Examples of some mercaptans are n-octyl mercaptan, n-dodecyl mercaptan, t-octyl mercaptan, t-dodecyl mercaptan (also preferred), p-tridecyl mercaptan, tetradecyl mercaptan, hexadecyl mercaptan and so forth and mixtures thereof. These modifiers are used generally in a total amount of from about 0.15 to 0.9 phm (parts 100 parts monomers).

Temperatures used during graft copolymerization should be sufficient to effect polymerization by activation of the catalyst and double bonds of the monomer(s). They should not be too high to cause a runaway reaction and not too low to retard polymerization. In general, the temperature is preferably from about 40 to 80°C. Times for polymerization may vary from about 8 to 14 hours depending on the degree of polymerization desired. Generally, it is desired to carry polymerization to about 100% conversion.

The graft copolymerization should be conducted under alkaline conditions utilizing materials like $NH_4OH$ and the like. In general the pH of the polymerization media should be from about 8.5 to 10, preferably from about 9 to 9.5.

The water used during graft copolymerization should be free of deleterious materials and preferably should be distilled or ion exchanged. Sufficient water is used to enable maintenance of the emulsion or latex and to enable proper mixing or stirring of the ingredients during polymerization to obtain the desired rate and degree of polymerization, heat transfer and so forth. The solids content after removal of water may be from about 30 to 40% by weight.

Graft copolymerization should be conducted in a closed reactor, such as a pressure reactor, fitted with a stirrer or other agitating means, evacuating means, heating and cooling means, with means to flush with or pump in an inert gas such as nitrogen, helium, argon, neon and the like if desired, with means to charge monomers, water, initiators, venting means, and with means to recover the polymer and so forth. The reactor should be cleaned or flushed between polymerization runs to remove traces of initiators, modifiers, residues and so forth which might interfere with subsequent polymerizations. There should be sufficient agitation or stirring of the polymerization media to ensure thorough mixing, diffusion, contact and so forth.

Free radical aqueous polymerization and copolymerization of ethylenically unsaturated monomers are well known to those skilled in the art. In this connection please see Whitby et al, "Synthetic Rubber," John Wiley & Sons, Inc., New York, 1954; Bovey et al, "Emulsion Polymerization," High Polymers, Vol. IX, Interscience Publishers, Inc., 1955; Schildknecht, "Vinyl and Related Polymers," John Wiley & Sons, Inc., New York, 1952 and "Encyclopedia of Polymer Science and Technology," Vol. 3 (1965), Vol. 5 (1966), Vol. 7 (1967), Vol. 9 (1968) and Vol. 11 (1969), Interscience Publishers, a division of John Wiley & Sons, Inc., New York.

In the practice of the present invention, the polymerization may be considered as a graft copolymerization, over copolymerization, core/shell copolymerization or an interpolymerization. The technique of polymerizing or copolymerizing one or more monomers in the presence of a polymer or a substrate, "grafting technique," is known and is frequently called graft polymerization or graft copolymerization. In this connection, please see "Proceedings Of The Third Rubber Technology Congress," 1954, W. Heffer & Sons, Ltd., Cambridge, pages 185-195; "Copolymerization," High Polymers, Vol. XVIII, Ham, Interscience Publishers a division of John Wiley & Sons, New York, 1964; "Block and Graft Polymers," Burlant and Hoffman, Reinhold Publishing Corporation, New York, 1960; "Block and Graft Copolymers," Ceresa, Butterworth & Co. (Publishers) Ltd., London, 1962; "Block and Graft Copolymerization," Ceresa, Vol. 1 (1973) and Vol. 2 (1976), John Wiley & Sons, Ltd., New York and "Graft Copolymers," Polymer Reviews, Vol. 16, Battaerd and Tregear, Interscience Publishers, a division of John Wiley & Sons, New York, 1967. The graft copolymer may contain all graft copolymer but also may be a mixture of homopolymers, copolymers as well as the graft itself, depending on the rate of polymerization of the monomers, the polymerization conditions and so forth.

The graft copolymer latices of the present invention can be treated during or after polymerization with antioxidants, biocides, defoamers, additional alkaline material such as $NH_4OH$ and so forth.

All of the graft copolymerization ingredients may be charged to the reactor at once and graft copolymerization continued to completion or a seed type of latex may be formed by first graft copolymerizing part of the conjugated diene monomer and vinyl aryl monomer on the protein in the presence of some of the polymerization materials followed by further additions of the conjugated diene monomer and vinyl aryl monomer along with the remaining polymerization materials.

The latices of the present invention can be mixed with finely divided fillers such as paper coating fillers like clays, kaolin, calcium carbonate, titanium dioxide, zinc oxide and other inorganic fillers used in paper coating compositions. Thickening agents, viscosity stabilizers, additional alkaline material like $NH_4OH$ and so forth can be added to these compositions. In general paper coating compositions of the present invention will have a solids content of from about 20 to 70% by weight. The solids comprising from about 2 to 20% by weight, on a dry weight basis, of the graft copolymer and from 98 to 80% by weight of the paper coating fillers. The paper coating composition may be spread on paper and hot calendered to cure or set the graft copolymer and form an adherent and dried coating on the paper. For example, in some paper coating latices an acid containing comonomer is used, but, here, such a -COOH containing monomer is not needed. In using the latex in a paper coating composition additional cobinder is not required. The latex is useful as a binder for pigmented paper coating compositions to be printed by gravure or offset printing processes and is particularly useful in compositions for lightweight paper to be printed by the gravure process. The latex, also, can be used in compositions for cylinder boards.

The following examples will serve to illustrate the present invention with more particularity to those skilled in the art. In the examples the parts are parts by weight unless otherwise indicated.

In the examples, the ultrasound treatment was conducted on several sets of latices. The rheological data of the latices were obtained with a Rotovisco RV100 viscometer, using the NV rotor and cup, at shear rates between $27^{-1}$ and 2700 $sec^{-1}$ (ramping between shear rates, 5.0 minutes). Light transmission results were obtained on 0.0025% solids dispersions of the latices using the Rao (Brice-Phoenix type) light scattering photometer, at 180° angle, and in a cylindrical cell having flat entrance and exit sides.

The ultrasonic irradiation of the latices was done using a Sonifier, Model S75, made by the Branson Instrument Company. The unit delivered a 75 watt, 20,000 Hz (Hertz) signal from a 1.27 cm diameter cylindrical probe inserted about 1.5 cm into the latex. Other ultrasonic devices may be used at different voltages and Hz signals for various times to achieve the same results.

Example 1

To a clean, $N_2$ flushed reactor were charged 215 parts of deionized water, 0.05 part of SEQUESTRENE $Na_3$, 18.50 parts of soy protein, 0.10 part of DREW L-198 and sufficient aqueous ammonium hydroxide to provide a pH of from about 9 to 9.5 and to solubilize the soy protein. The temperature of the mixture was raised to 150°F (65.6°C), and the reactor was evacuated minimally to avoid losing $NH_4OH$. Next there were added to the reactor 13.3 parts of styrene containing 0.60 part of VAZO 64 followed by 0.15 part of SULFOLE 120 and 13.8 parts of butadiene-1,3, and polymerization was conducted to a total solids content of from about 14 to 16% by weight. Additional increments of styrene, SULFOLE 120 and butadiene-1,3 were added to the reactor to obtain a final theoretical solids content of the latex of about 32.2%. Then 0.5 part of DREW L-198 was added to the latex. The reactor was cooled and then the latex was stripped of residual monomers. Finally, there were added to the latex 0.80 part aqueous PROXEL GXL (25% solids) and sufficient aqueous $NH_4OH$ to obtain a pH of from about 9.0 to 9.5. During this graft copolymerization the total amounts added of butadiene-1,3 were 41.25 parts, of SULFOLE 120 were 0.45 part and of styrene were 39.88 parts.

After polymerization a sample of the latex was subjected to ultrasonic irradiation. Another sample was not treated (the control). The results obtained are shown below in Table I:

## Table I
### EFFECTS OF ULTRASONIC TREATMENT ON VISCOSITY AND LIGHT TRANSMISSION

| Treatment | Days After Treatment | Viscosity (mPa sec) | |
| | | $270\ sec^{-1}$ | $2700\ sec^{-1}$ |
|---|---|---|---|
| None | - | 27.6 | 17.1 |
| 5 Minutes | 0 | 15.8 | 11.2 |
| Ultrasonic | 1 | 15.8 | 11.3 |
| Irradiation** | 5 | 16.5 | 11.5 |
| | 22 | 16.9 | 12.1 |

### Table I (Cont'd.)

| Treatment | Days After Treatment | Light Transmission (%)* | | | |
| | | Unfiltered | Filtered | | |
| | | | .45 µm | .8 µm | 1.2 µm |
|---|---|---|---|---|---|
| None | - | 74.5 | 87 | 85 | 83 |
| 5 Minutes | 0 | 80 | 87 | 85 | 84.5 |
| Ultrasonic | 1 | - | - | - | - |
| Irradiation** | 5 | - | - | - | - |
| | 22 | - | - | - | - |

*Diluted latex with distilled, deionized, filtered water to 0.0025% solids; filtered diluted latex through Millipore filters. Lower number means less light transmission.

**Ultrasonic probe, Sonifier Model S-75, Branson Instruments Inc.

In Table I are summarized the rheological and light transmission data obtained. The viscosity at the lowest shear rate (270 sec⁻¹) was reduced by 43% after 5 minutes ultrasonic treatment. The higher shear viscosity (at 2700 sec⁻¹) was reduced by about 35%. Thus, the shear dependence of the viscosity was reduced indicating closer to a Newtonian rheology, normally found as latex solids are reduced.

The light transmission changed from 74.5% to 80% in this latex, indicating a decrease in average particle size. The percent light transmission was further increased in both cases (treated and untreated) by passing the diluted latices through Millipore filters. However, the transmission after passage through the 1.2 µm filter was slightly higher for the treated sample, indicating a reduction in the number of extremely large particles (agglomerates).

The treated latex was also examined periodically after treatment. Only slight increases in viscosity were detected after 22 days.

Notes for the example:

SEQUESTRENE Na₃ -Trisodium ethylene diamine tetraacetate dihydrate. Ciba-Geigy Corp.

SULFOLE 120 - t-dodecyl mercaptan, avg. mol. wt. 198, calc. purity wt. % 96.8 and mercaptan sulfur wt. % 15.4. Phillips Petroleum Co., Rubber Chem. Div.

DREW L-198 - Emulsifiable mixture of mineral oil, silica derivatives and esters. Defoamer. Drew Chemical Corp.

PROXEL GXL - Chemical biocide. ICI Americas Inc.

VAZO 64 - 2,21-azobisisobutyronitrile or $(CH_3)_2(CN)CN = NC(CN)(CH_3)_2$. du Pont

Soy protein - Anionic carboxylated soy protein in powder form. At 20% solids in alkaline media it has a Brookfield viscosity of about 2500 RVT (10 RPM) at 25°C, Ralston Purina Company Polymer 2500. See U.S. Pat. No. 4,474,694.

## Example 2

Graft copolymers were prepared according to the general process of Example 1 except that the amounts of some of the ingredients were varied in producing the graft copolymer latices. After the graft copolymerizations were completed, the properties of the latices, also, were determined. The results obtained are shown in Table II below:

### Table II
### GENERAL RECIPE AND POLYMERIZATION PROCEDURES

| Ingredient | Recipe Parts Active | Parts 'as is' |
|---|---|---|
| Styrene | 40 | 40 |
| Butadiene | 41.5 | 41.5 |
| PRO-COTE 200LV* | 18.5 | 123.33 |

### Table II (Cont'd.)

| Ingredient | Recipe Parts Active | Parts 'as is' |
|---|---|---|
| SULFOLE 120 | 0.45 | 0.45 |
| SEQUESTRENE Na3 | 0.05 | 0.05 |
| VAZO 64 | 0.6 | 0.6 |
| Deionized Water | - | 128.5 |

Theoretical percent total solids = 30.1

Polymerizations were conducted in one quart polymerization bottles at 65.5°C (150°F). Different proportions of the protein solution and monomers were added as follows to the aqueous charge (water + SEQUESTRENE) with the first polymerization step taking 5.5-6 hours and the second step taking 7 hours.

| Latex | Fraction of Protein in 1st Step | Fraction of Protein in 2nd Step | Fraction of Monomers in 1st Step | Fraction of Monomers in 2nd Step | % Solids |
|-------|------|------|------|------|------|
| A | 1 | 0 | 1 | 0 | 29.8 |
| B | 0.5 | 0.5 | 1 | 0 | 29.5 |
| C | 0.33 | 0.67 | 1 | 0 | 27.7 |
| D | 1 | 0 | 0.5 | 0.5 | 29.7 |
| E | 0.5 | 0.5 | 0.5 | 0.5 | 30.4 |
| F | 0.33 | 0.67 | 0.5 | 0.5 | 28.6 |
| G | 1 | 0 | 0.33 | 0.67 | 30.1 |
| H | 0.5 | 0.5 | 0.33 | 0.67 | 30.0 |
| I | 0.33 | 0.67 | 0.33 | 0.67 | 30.1 |

*Added as a 15% solution, prepared by adding 111 parts of 10% $NH_3$ to a slurry of 100 parts of the soy protein (solid) in water, with stirring at $57^{\circ}C$ for 30 minutes, pH = 8.9

## Table III

### EFFECTS OF LENGTH OF ULTRASONIC TREATMENT AND TIME AFTER TREATMENT ON LATEX VISCOSITY

| Latex | Treatment Time (min.) | Days After Treatment | Viscosity (mPa) sec) $270$ sec$^{-1}$ | $2700$ sec$^{-1}$ |
|-------|------|------|------|------|
| A | None | - | 120 | 47.1 |
| A | 5 | 0 | 18.2 | 12.4 |
| A | 5 | 1 | 19.4 | 12.8 |
| A | 10 | 0 | 13.6 | 11.2 |
| A | 10 | 1 | 15.8 | 11.6 |
| A | 10 | 5 | 15.8 | 11.7 |
| A | 10 | 24 | 18.3 | 12.3 |
| B | None | - | 160 | 57.2 |
| B | 5 | 0 | 12.1 | 10.8 |
| B | 5 | 1 | 12.3 | 10.9 |
| B | 10 | 0 | 10.6 | 10.0 |
| B | 10 | 1 | 10.6 | 10.0 |
| B | 10 | 5 | 10.1 | 10.1 |
| B | 10 | 24 | 13.3 | 11.1 |

The effects of duration of the ultrasonic treatment and time after treatment of two of these latices can be observed in Table III. Although a 5-minute treatment caused most of the viscosity reduction, another 5 minutes gave a slight further reduction in viscosity, mainly at the lower shear rate. Again, the treatment seems relatively permanent with only slight viscosity increases in 24 days.

Example 3

The viscosity and light transmission data for a more extensive series of bottle latices (recipes are given in Table II) are given in Table IV, below. These results show the beneficial effect of the ultrasonic treatment in reducing the viscosity of each latex, and they also show the effect of delaying the addition of a portion of the protein solution and of varying the amounts of monomers added initially. For example, in the first group of three latices (in which all the monomers were added initially), a systematic reduction in viscosity of the ultrasonically treated latices can be seen. This effect was also seen in the second and third groups of three latices. These viscosity reductions are presumably caused by the corresponding increases in average particle size as shown by the systematic reductions in light transmission in each series. The effect of incrementing the monomers rather than adding of all of the monomers initially was not found to be greatly beneficial. That is, latices in the second and third groups of three were slightly higher in viscosity and lower in particle size (higher light transmission) than corresponding latices from the first group. However, in some instances, the incremented monomer addition resulted in smaller differences in light transmission between filtered and unfiltered latices, indicating that less filterable (extremely large) material was present in those latices.

## Table IV
### VISCOSITY AND LIGHT TRANSMISSION DATA
### EFFECTS OF 10 MINUTES ULTRASONIC TREATMENT

#### Viscosity (mPa sec)

| Latex | Solids | Before Treatment | | After Treatment | |
|---|---|---|---|---|---|
| | | 270 sec$^{-1}$ | 2700 sec$^{-1}$ | 270 sec$^{-1}$ | 2700 sec$^{-1}$ |
| A | 29.8 | 120.0 | 47.1 | 13.6 | 11.2 |
| B | 29.5 | 160.2 | 57.2 | 10.6 | 10.0 |
| C | 27.7 | 83.7 | 41.1 | 8.4 | 8.5 |
| D | 29.7 | 123.3 | 45.5 | 15.8 | 11.4 |
| E | 30.4 | 125.3 | 48.5 | 12.5 | 10.7 |
| F | 28.6 | 108.8 | 42.8 | 11.9 | 10.0 |
| G | 30.1 | 131.9 | 48.7 | 21.1 | 13.4 |
| H | 30.0 | 129.9 | 48.2 | 15.8 | 11.6 |
| I | 30.1 | 113.4 | 44.0 | 14.0 | 10.8 |

### Table IV (Cont'd.)

#### Light Transmission (%) +

| Latex | % Solids | Before Treatment | | After Treatment | |
|---|---|---|---|---|---|
| | | Unfiltered | Filtered .45 μm | Unfiltered | Filtered .45 μm |
| A | 29.8 | 61.5-67.5 | 89-94 | 84.0 | 86.7 |
| B | 29.5 | 33.9-35.8 | 94-99 | 62.6 | 86.7 |
| C | 27.7 | 29.3 | - | 50.5 | 75.8 |
| D | 29.7 | 67.7 | - | 86.0 | 88.5 |
| E | 30.4 | 60.7 | - | 82.5 | 84.3 |
| F | 28.6 | 50.3 | - | 74.5 | 79.7 |
| G | 30.1 | 67.8 | - | 85.4 | 88.4 |
| H | 30.0 | 62.5 | - | 84.0 | 85.6 |
| I | 30.1 | 59.2 | - | 81.5 | 82.8 |

+Light transmission results on 0.0025% solids dispersions
(dilutions with distilled, deionized, and filtered water)

### Example 4

The results of ultrasonically treating a series of bottle latices prepared with several different soy proteins are shown in Table V, below. In this group, the largest effect was seen in the highest viscosity latex N made with PP9001 protein. In this case, the maximum reduction in viscosity was accomplished only after 20 minutes treatment, while the J sample (made with PP2500) reached its lowest viscosity after only 10 minutes irradiation.

## Table V
### ULTRASONIC TREATMENT OF LATEXES MADE WITH DIFFERENT SOY PROTEINS*

| | | | Latex Viscosities (mPa sec) | |
| | | | Untreated | |
| Latex | Protein | % Solids | $270 \text{ sec}^{-1}$ | $2700 \text{ sec}^{-1}$ |
|---|---|---|---|---|
| J | PP2500 | 30.0 | 119 | 49.6 |
| K | PP4000 | 29.7 | 37.6 | 22.6 |
| L | PRO-COTE 200LV | 29.8 | 58.0 | 31.3 |
| M | PRO-COTE 400 | 30.0 | 64.0 | 33.9 |
| N | PP9001 | 30.1 | 347 | - |

### Table V (Cont'd.)
### ULTRASONIC TREATMENT OF LATEXES MADE WITH DIFFERENT SOY PROTEINS*

| | Latex Viscosities (mPa sec) | | | | | |
| | 10-Min. Ultrasound | | 20-Min. Ultrasound | | 30-Min. Ultrasound | |
| Latex | $270 \text{ sec}^{-1}$ | $2700 \text{ sec}^{-1}$ | $270 \text{ sec}^{-1}$ | $2700 \text{ sec}^{-1}$ | $270 \text{ sec}^{-1}$ | $2700 \text{ sec}^{-1}$ |
|---|---|---|---|---|---|---|
| J | 17.5 | 11.9 | 17.1 | 11.4 | 16.5 | 10.9 |
| K | 9.0 | 8.4 | - | - | - | - |
| L | 9.9 | 8.7 | - | - | - | - |
| M | 10.6 | 9.4 | - | - | - | - |
| N | 24.4 | 16.8 | 11.2 | 9.7 | 12.0 | 9.6 |

*Recipes used were identical with that of Table II except that different proteins were used and the proteins were added as 10% solutions. All of these soy proteins were obtained from the Ralston Purina Company, St. Louis, MO.

PP = PURINA POLYMER

All ultrasonic irradiation (ultrasound) treatments of the latices were conducted at 75 watts and 20,000 Hz signal using the apparatus (Sonifier) as described supra.

Examination of ultrasonically treated and untreated graft copolymer latices using light microscopy revealed that many more visible "particles" (or agglomerates) were present in the untreated samples. Normally, SBR latex particles are not observable by light microscopy unless they are greater than 0.3 μm in diameter. Transmission electron microscopical studies of these graft copolymer latices gave similar results, i.e., large agglomerates containing several hundred latex particles were present in the untreated samples. The treated samples still showed some apparently loose aggregates of particles, but the more compact three-dimensional structures were absent. In several cases, a few extremely large single particles were observed in the sonicated latices but were not visible in the untreated samples. It is not known whether those particles resulted from the sonication or whether they had simply been hidden in the particle masses in the untreated samples.

It is seen that protein-styrene-butadiene graft copolymer latices with viscosities lower than normally obtainable for such latices can be obtained by ultrasonic treatment of those latices. In addition, still further decreases in viscosity can be obtained by reducing the amount of the protein present at the beginning of the polymerization, with the balance of the protein required for latex stabilization being added later on in the polymerization process. Viscosity reductions of from about 40% to as much as 90% were obtained with the ultrasonic treatment and the protein incrementing gave a further decrease of about 5%.

Light transmission measurements, optical microscopical and electron microscopical studies indicated that ultrasonic treatment broke up particle groupings in these graft latices. These particle groupings, when present, tend to drastically increase the viscosity, especially at low shear rates. The results of the treatment are long-lasting with only slight reassociation of particles detected after three weeks.

The protein incrementing results in an increase in the average particle size in the latices.

## Claims

1. The method which comprises ultrasonically irradiating an alkaline latex of a graft or over copolymer of at least one copolymerizable conjugated diene monomer having from 4 to 6 carbon atoms and at least one copolymerizable vinyl aryl monomer having from 8 to 12 carbon atoms on a protein at a level of frequency and for a period of time sufficient to reduce the viscosity of and to increase the light transmission of said latex, wherein said latex is produced by using

(a) said diene monomer in an amount of from about 25 to 50 parts by weight,

(b) said vinyl aryl monomer in an amount of from 30 to 60 parts by weight and

(c) said protein in amount of from 10 to 30 parts by weight, the sum of (a), (b) and (c) being 100 parts by weight.

2. The method according to claim 1 where said conjugated diene monomer is butadiene-1,3, said vinyl aryl monomer is styrene and said protein is soy protein.

3. The method according to claim 1 or claim 2 where the protein has been added incrementally to the monomers during the course of the graft or over copolymerization process of grafting said monomers on said protein.

4. The product produced by the method of any one of claims 1-3.

5. An aqueous, alkaline latex containing a graft or over copolymer of at least one copolymerizable conjugated diene monomer having from 4 to 6 carbon atoms and at least one copolymerizable vinyl aryl monomer having from 8 to 12 carbon atoms on a protein wherein in said graft polymer

(a) said diene monomer is present in an amount of from about 25 to 50 parts by weight,

(b) said vinyl aryl monomer is present in an amount of from 30 to 60 parts by weight and

(c) said protein is present in an amount of from 10 to 30 parts by weight, the sum of (a), (b) and (c) being 100 parts by weight, and where said latex has a viscosity (mPa sec.) at 2700 sec$^{-1}$ of from about 5 to 20.

6. An aqueous alkaline latex according to claim 5 where said conjugated diene monomer is butadiene-1,3, said vinyl aryl monomer is styrene and said protein is a soy protein.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | JOURNAL OF POLYMER SCIENCE, POLYMER LETTERS EDITION, vol. 14, 1976, pages 215-218, John Wiley & Sons, Inc., New York, US; L.A. GUGLIEMELLI et al.: "Cationic starch graft-poly-chloroprene latexes" * Page 215, lines 17-18; page 217, lines 8-11 * | 1-5 | C 08 F 289/00 C 09 J 7/04 C 08 J 3/28 |
| | --- | | |
| P,Y | EP-A-0 213 947 (RALSTON PURINA) * Claim 1 * | 1-5 | |
| | --- | | |
| A | BE-A- 537 196 (KODAK) * Abstract; page 2, lines 25-26,51,55-56 * | | |
| | ----- | | |

TECHNICAL FIELDS SEARCHED (Int. Cl.4)

C 08 F
C 08 J

The present search report has been drawn up for all claims

| Place of search | Date of completion of the search | Examiner |
|---|---|---|
| THE HAGUE | 19-06-1987 | VAN HUMBEECK F.W.C. |